# EUROPÄISCHE PATENTANMELDUNG

(11) **EP 2 687 768 A2**
(43) Veröffentlichungstag der Anmeldung: **22.01.2014**
(21) Anmeldenummer: 13000804.8
(22) Anmeldetag: 16.02.2013
(51) Int. Cl.: F16L 41/06, G01L 19/00

(54) **Vorrichtung zur Entnahme von Fluid aus einer Rohrleitung**

(30) Priorität: 18.07.2012 DE 102012106479
(71) Anmelder: Budach, Maik, 71299 Wimsheim (DE)
(72) Erfinder: Budach, Maik, 71299 Wimsheim (DE)
(74) Vertreter: Kiessling, Christian

(57) **Zusammenfassung**

Bei einer Vorrichtung (100) zur Entnahme von Fluid aus einer Rohrleitung (110), mit einer durch die Wandung der Rohrleitung (110) geführten Entnahmeleitung (120) sowie einer im Bereich der Verbindungsstelle von Rohrleitung (110) und Entnahmeleitung (120) vorgesehenen, die Rohrleitung (110) umfassenden Schelle (130), wird eine Entnahme einer Fluidprobe ohne Unterbrechung des Fluidtransportes in der betreffenden Rohrleitung (110) dadurch ermöglicht, dass die Schelle (130) als ein im Wesentlichen massiver, mit einem eine radial zur Rohrleitung (110) ausgerichtete Bohrung aufweisenden Schellenturm (150) versehener blockartiger Schellenkörper (130) ausgebildet ist, bei die Bohrung des Schellenturms (150) zumindest in dem der Rohrleitung (110) nahen Bereich mit einem Innengewinde (151) für ein Zusammenwirken mit einem Außengewinde (152) eines Schellenrohres versehen ist, wobei das Schellenrohr (153) im Bereich seines der Rohrleitung (110) nahen Endes an ein eine Öffnung einer Fluidkommunikations-verbindung zwischen dem Inneren der Rohrleitung (110) und dem Schellenrohr (153) aufweisendes Entnahmerohr (120) angrenzt, dessen Durchmesser geringer als der Durchmesser des Schellenrohres (153) bemessen ist und das im Bereich seiner der Rohrleitung (110) nahen Stirnfläche mit einem Bohrer (160) zum Anbohren der Rohrleitung (110) versehen ist, wobei im Bereich des der Rohrleitung (110) fernen Endes des Schellenrohres (153) ein Adapterelement (170) zum lösbaren Anbringen einer Fluidentnahme-Einrichtung vorgesehen ist.

## Beschreibung

Die Erfindung betrifft eine Vorrichtung zur Entnahme eines Fluidums wie Wasser oder Gas aus einer Rohrleitung, mit einer durch die Wandung der Rohrleitung geführten Entnahmeleitung sowie einer im Bereich der Verbindungsstelle von Rohrleitung und Entnahmeleitung vorgesehenen, die Rohrleitung umfassenden Schelle.

Entnahme-Vorrichtungen der eingangs genannten Art werden im Stand der Technik in den verschiedensten Anwendungsbereichen für sehr unterschiedliche Zwecke verwendet. Insbesondere werden derartige Vorrichtungen für die Entnahme von Probemengen des betreffenden Fluidums zum Zweck einer Untersuchung und Überprüfung der Einhaltung von Reinheitsvorschriften verwendet.

Die bekannten Entnahme-Vorrichtungen weisen indes sämtlich den Nachteil auf, dass für eine Probeentnahme ein Fluss des entsprechenden Fluidums unterbrochen werden muss, wodurch eine Probeentnahme zeitaufwendig ist und des Weiteren wirtschaftliche Nachteile durch die Unterbrechung des Fluidtransportes entstehen.

Aufgabe der Erfindung ist es deshalb, eine Entnahme-Vorrichtung zu schaffen, bei der die Entnahme einer Fluidprobe ohne Unterbrechung des Fluidtransportes in der bereffenden Rohrleitung ermöglicht ist.

Für eine Entnahme-Vorrichtung der eingangs genannten Art wird diese Aufgabe erfindungsgemäß dadurch gelöst, dass die Schelle als ein im Wesentlichen massiver, mit einem eine radial zur Rohrleitung ausgerichtete Bohrung aufweisenden Schellenturm versehener blockartiger Schellenkörper ausgebildet ist, wobei die Bohrung des Schellenturms zumindest in dem der Rohrleitung nahen Bereich mit einem Innengewinde für ein Zusammenwirken mit einem Außengewinde eines Schellenrohres versehen ist, wobei das Schellenrohr im Bereich seines der Rohrleitung nahen Endes an ein eine Öffnung einer Fluidkommunikationsverbindung zwischen dem Inneren der Rohrleitung und dem Schellenrohr aufweisendes Entnahmerohr angrenzt, dessen Durchmesser geringer als der Durchmesser des Schellenrohres bemessen ist und das im Bereich seiner der Rohrleitung nahen Stirnfläche mit einem Bohrer zum Anbohren der Rohrleitung versehen ist, wobei im Bereich des der Rohrleitung fernen Endes des Schellenrohres ein Adapterelement zum lösbaren Anbringen einer Fluidentnahme-Einrichtung vorgesehen ist.

Bevorzugte Ausführungsformen der Erfindung sind Gegenstand der Unteransprüche.

Bei der erfindungsgemäßen Entnahme-Vorrichtung wird durch die Merkmalskombination, dass die Schelle als ein im Wesentlichen massiver, mit einem eine radial zur Rohrleitung ausgerichteten Bohrung aufweisenden Schellenturm versehener blockartiger Schellenkörper ausgebildet ist, wobei die Bohrung des Schellenturms zumindest in dem der Rohrleitung nahen Bereich mit einem Innengewinde für ein Zusammenwirken mit einem Außengewinde eines Schellenrohres versehen ist, wobei das Schellenrohr im Bereich seines der Rohrleitung nahen Endes an ein eine Öffnung einer Fluidkommunikationsverbindung zwischen dem Inneren der Rohrleitung und dem Schellenrohr aufweisendes Entnahmerohr angrenzt, dessen Durchmesser geringer als der Durchmesser des Schellenrohres bemessen ist und das im Bereich seiner der Rohrleitung nahen Stirnfläche mit einem Bohrer zum Anbohren der Rohrleitung versehen ist, wobei im Bereich des der Rohrleitung fernen Endes des Schellenrohres ein Adapterelement zum lösbaren Anbringen einer Fluidentnahme-Einrichtung vorgesehen ist, erreicht, dass ein Entnahmekörper als Teil einer Entnahmeleitung geschaffen ist, mit dessen Einsatz die Herstellung einer sicher verschließbaren, aus der Rohrleitung nach außen herausführenden Fluidkommunikationsverbindung ermöglicht ist.

Gemäß einer ersten bevorzugten Ausführungsform der erfindungsgemäßen Entnahme-Vorrichtung ist vorgesehen, dass der Bohrer des Entnahmerohres einen sich zu einer Spitze verjüngenden Konuskörper enthält und ausgebildet ist, um mittels entsprechenden Drehens des Schellenrohres innerhalb des Gewindes des Schellenturmes ein Loch in die Wandung der Rohrleitung zu bohren und die Öffnung des Entnahmerohres in das Innere der Rohrleitung zu führen. Der Bohrer ist dabei vorzugsweise mit einem nach außen abspanenden Außengewinde versehen, so dass die bei einem Bohrvorgang erzeugten Späne innerhalb der Bohrung des Schellenturms zu liegen kommen.

Gemäß einer wichtigen bevorzugten Ausführungsform der erfindungsgemäßen Entnahme-Vorrichtung ist vorgesehen, dass das Entnahmerohr, das Schellenrohr sowie das Adapterelement einstückig ausgebildet sind und zusammen einen Entnahmekörper bilden, der einen verschließbaren Teil einer Entnahmeleitung bildet und von einem ersten Zustand, in dem das Entnahmerohr durch entsprechendes Drehen des Schellenrohres in dem Gewinde des Schellenturms in das Innere der Rohrleitung eingeführt ist, reversibel in einen zweiten Zustand überführbar ist, in dem das Entnahmerohr durch entsprechend entgegengesetztes Drehen des Schellenrohres in dem Gewinde des Schellenturms zumindest im Wesentlichen aus dem Inneren der Rohrleitung herausgeführt ist und die Öffnung des Entnahmerohres innerhalb der Bohrung des Schellenkörpers zu liegen kommt.

Das Adapterelement ist vorzugsweise mit einem Innengewinde versehen, das für die Aufnahme eines mit einem entsprechenden Außengewinde versehenen Endes einer Fluidentnahme-Einrichtung vorgesehen ist. Wenn das Fluid von Wasser gebildet ist, kann die Fluidentnahme-Einrichtung von einem im Wesentlichen herkömmlichen Wasserhahn gebildet sein.

Gemäß einer weiteren bevorzugten Ausführungsform der erfindungsgemäßen Entnahme-Vorrichtung ist vorgesehen, dass der Schellenkörper von zwei über eine Mehrzahl von Schrauben fest miteinander verbundenen Schellen gebildet ist, wobei eine der Schellen einstückig mit dem Schellenturm ausgebildet ist. Im Bereich des Schellenkörpers zwischen der Rohrleitung und einer Innenbohrung des Schellenkörpers zur Aufnahme der Rohrleitung ist vorzugsweise eine Gummidichtung vorgesehen.

Um eine Führung bei einem Bohrvorgang zu erhalten, weist die Bohrung des Schellenturms in einem der Rohrleitung fernen Bereich vorzugsweise eine glatte Innenwandung zur Aufnahme eines glatt ausgebildeten rohrleitungsnahen Ansatzes des Schellenrohres auf.

Gemäß einer weiteren wichtigen bevorzugten Ausführungsform der erfindungsgemäßen Entnahme-Vorrichtung ist vorgesehen, dass die Öffnung des Entnahmerohres als in der Nachbarschaft des Bohrers angeordnete Querbohrung ausgebildet ist, in die eine mit dem Inneren des Schellenrohres kommunizierende axial ausgerichtete Höhlung des Entnahmerohres mündet, zur Aufnahme eines Teils des in der Rohrleitung fließenden Fluids.

Der Schellenturm kann vorzugsweise mit einem Außengewinde versehen sein, zum Zusammenwirken mit dem Innengewinde einer das Adapterelement abdeckenden Sicherungsmutter. Die Sicherungsmutter weist dabei im Bereich eines abgedeckten Adapterelementes vorzugsweise eine zentrale Bohrung auf, um einen Schraubenschlüssel durch die Bohrung führen zu können und dadurch ein Ansetzen des Schraubenschlüssels an einem entsprechenden Gegenstück des Entnahmekörpers zu ermöglichen, zum Zweck eines Drehens des Entnahmekörpers. Die erfindungsgemäße Entnahme-Vorrichtung wird im Folgenden anhand einer bevorzugten Ausführungsform erläutert, die in den Figuren der Zeichnung dargestellt ist. Darin zeigen:
- Fig.1: eine erste bevorzugte Ausführungsform der erfindungsgemäßen Vorrichtung in einem zweiten Zustand in einer Querschnittsansicht;
- Fig.2: Die in Figur 1 dargestellte Ausführungsform der erfindungsgemäßen Vorrichtung in einem ersten Zustand in einer Querschnittsansicht.

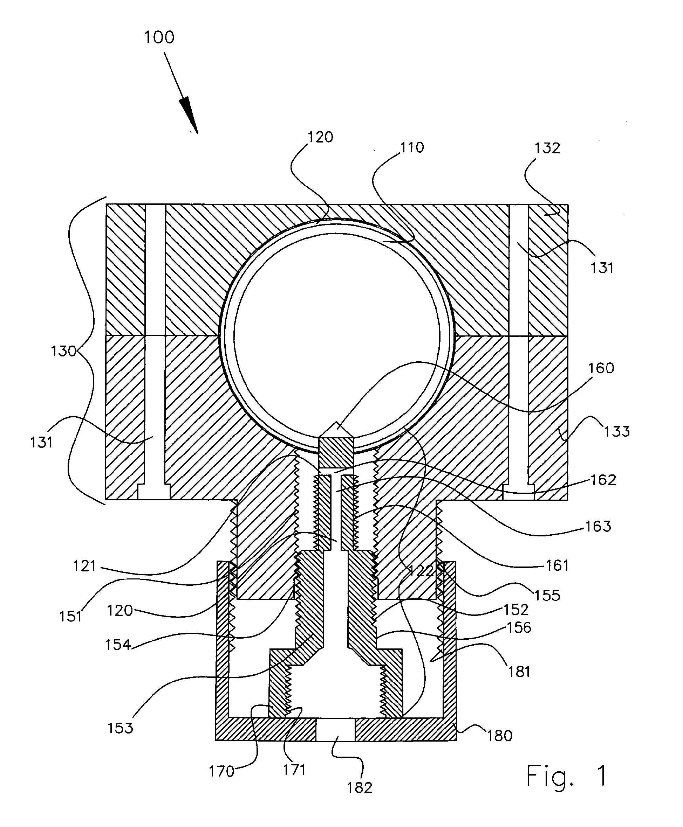

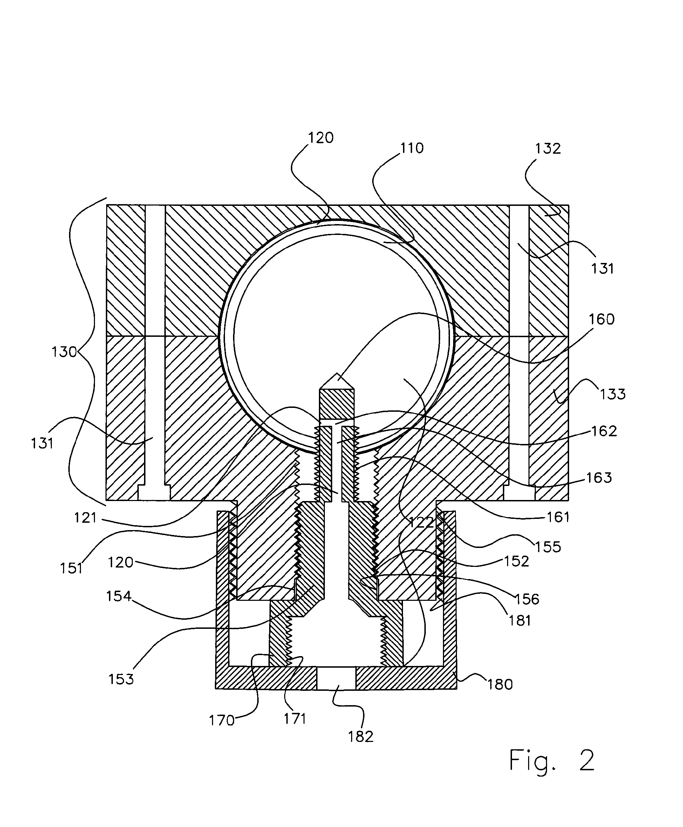

Die in den Figuren 1 und 2 dargestellte erfindungsgemäße Vorrichtung 100 zur Entnahme von Fluid aus einer Rohrleitung 110, enthält eine durch die Wandung der Rohrleitung 110 geführte Entnahmeleitung 120 sowie eine im Bereich der Verbindungsstelle von Rohrleitung 110 und Entnahmeleitung 120 vorgesehene Schelle 130, die die Rohrleitung 110 enganliegend vollständig umfasst, wobei zwischen der Außenfläche der Rohrleitung 110 und einer inneren Bohrung der Schelle 130 eine fest sitzende Gummidichtung 140 angebracht ist.

Die Schelle 130 ist als ein im Wesentlichen massiver, mit einem eine radial zur Rohrleitung 110 ausgerichtete Bohrung aufweisenden Schellenturm 150 versehener blockartiger Schellenkörper 130 ausgebildet, wobei die Bohrung des Schellenturms 150 zumindest in dem der Rohrleitung 110 nahen Bereich mit einem Innengewinde 151 für ein Zusammenwirken mit einem Außengewinde 152 eines Schellenrohres 153 versehen ist.

Das Schellenrohr 153 grenzt im Bereich seines der Rohrleitung 110 nahen Endes an ein eine Öffnung einer Fluidkommunikationsverbindung zwischen dem Inneren der Rohrleitung 110 und dem Schellenrohr 153 aufweisendes Entnahmerohr 120 an, dessen Durchmesser geringer als der Durchmesser des Schellenrohres 153 bemessen ist und das im Bereich seiner der Rohrleitung 110 nahen Stirnfläche mit einem Bohrer 160 zum Anbohren der Rohrleitung 110 versehen ist.

Im Bereich des der Rohrleitung 110 fernen Endes des Schellenrohres 153 ist ein Adapterelement 170 zum lösbaren Anbringen einer Fluidentnahme-Einrichtung vorgesehen.

Der Bohrer 160 des Entnahmerohres 120 enthält einen sich zu einer Spitze verjüngenden Konuskörper und ist ausgebildet, um mittels entsprechenden Drehens des Schellenrohres 153 innerhalb des Gewindes 151 des Schellenturmes 150 ein Loch in die Wandung der Rohrleitung 110 zu bohren und die Öffnung 121 des Entnahmerohres 120 in das Innere der Rohrleitung 110 zu führen. Dieser Vorgang ist in Figur 1 dargestellt, wobei eine Öffnung 121 des Entnahmerohres 120 in dem in Figur 1 dargestellten zweiten Zustand noch nicht in das Innere der Rohrleitung 110 eingedrungen ist, so dass keine Fluidkommunikationsverbindung zwischen dem Inneren der Rohrleitung 110 und dem Inneren des Entnahmerohres 120 gegeben ist. In dem in Figur 2 dargestellten ersten Zustand ist der Bohrvorgang beendet, und die Öffnung 121 des Entnahmerohres 120 ist im Inneren der Rohrleitung 110 platziert, so dass eine Fluidkommunikationsverbindung zwischen dem Inneren der Rohrleitung 110 und dem Inneren des Entnahmerohres 120 vorliegt.

Der Bohrer 160 ist ferner mit einem nach außen abspanenden Außengewinde 161 versehen, so dass die bei einem Bohrvorgang erzeugten Späne innerhalb der Bohrung des Schellenturms 150 zu liegen kommen.

Das Entnahmerohr 120, das Schellenrohr 153 sowie das Adapterelement 170 sind einstückig ausgebildet und bilden zusammen einen Entnahmekörper 122, der einen verschließbaren Teil einer Entnahmeleitung 120 bildet und von einem in Figur 2 dargestellten ersten Zustand, in dem das Entnahmerohr 120 durch entsprechendes Drehen des Schellenrohres 153 in dem Gewinde 151 des Schellenturms 150 in das Innere der Rohrleitung 110 eingeführt ist, reversibel in einen in Figur 1 dargestellten zweiten Zustand überführbar ist, in dem das Entnahmerohr 120 durch entsprechend entgegengesetztes Drehen des Schellenrohres 153 in dem Gewinde des Schellenturms zumindest im Wesentlichen aus dem Inneren der Rohrleitung 110 herausgeführt ist und die Öffnung 121 des Entnahmerohres 120 innerhalb der Bohrung des Schellenkörpers 130 zu liegen kommt.

Die Öffnung 121 des Entnahmerohres 120 ist als in der Nachbarschaft des Bohrers 160 angeordnete Querbohrung 162 ausgebildet, in die eine mit dem Inneren des Schellenrohres 153 kommunizierende axial ausgerichtete Höhlung 163 des Entnahmerohres 120 mündet, zur Aufnahme eines Teils des in der Rohrleitung 110 fließenden Fluids.

Das Adapterelement 170 ist mit einem Innengewinde 171 versehen, das für die Aufnahme eines mit einem entsprechenden Außengewinde versehenen Endes einer Fluidentnahme-Einrichtung vorgesehen ist. In der dargestellten Ausführung ist das Fluid von Wasser gebildet, und die Fluidentnahme-Einrichtung ist von einem nicht dargestellten herkömmlichen Wasserhahn gebildet.

Der Schellenkörper 130 ist von zwei über eine Mehrzahl von Schrauben 131 fest miteinander verbundenen Schellen 132, 133 gebildet, wobei eine der Schellen 133 einstückig mit dem Schellenturm 150 ausgebildet ist. Die Bohrung des Schellenturms 150 weist in einem der Rohrleitung 110 fernen Bereich eine glatte Innenwandung 154 zur Aufnahme eines glatt ausgebildeten rohrleitungsnahen Ansatzes 156 des Schellenrohres 153 auf.

Der Schellenturm 150 ist mit einem Außengewinde 155 versehen, zum Zusammenwirken mit dem Innengewinde 181 einer das Adapterelement 170 abdeckenden Sicherungsmutter 180. Die Sicherungsmutter 180 weist im Bereich eines abgedeckten Adapterelementes 170 eine zentrale Bohrung 182 auf, zum Führen eines Schraubenschlüssels durch die Bohrung 182 und Ansetzen des Schraubenschlüssels an einem entsprechenden Gegenstück des Entnahmekörpers 122, zum Zweck eines Drehens des Entnahmekörpers 122.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Vorrichtung (100) zur Entnahme von Fluid aus einer Rohrleitung (110), mit einer durch die Wandung der Rohrleitung (110) geführten Entnahmeleitung (120) sowie einer im Bereich der Verbindungsstelle von Rohrleitung (110) und Entnahmeleitung (120) vorgesehenen, die Rohrleitung (110) umfassenden Schelle (130), **dadurch gekennzeichnet, dass** die Schelle (130) als ein im Wesentlichen massiver, mit einem eine radial zur Rohrleitung (110) ausgerichtete Bohrung aufweisenden Schellenturm (150) versehener blockartiger Schellenkörper (130) ausgebildet ist, wobei die Bohrung des Schellenturms (150) zumindest in dem der Rohrleitung (110) nahen Bereich mit einem Innengewinde (151) für ein Zusammenwirken mit einem Außengewinde (152) eines Schellenrohres (153) versehen ist, wobei das Schellenrohr (153) im Bereich seines der Rohrleitung (110) nahen Endes an ein eine Öffnung einer Fluidkommunikationsverbindung zwischen dem Inneren der Rohrleitung (110) und dem Schellenrohr (153) aufweisendes Entnahmerohr (120) angrenzt, dessen Durchmesser geringer als der Durchmesser des Schellenrohres (153) bemessen ist und das im Bereich seiner der Rohrleitung (110) nahen Stirnfläche mit einem Bohrer (160) zum Anbohren der Rohrleitung (110) versehen ist, wobei im Bereich des der Rohrleitung (110) fernen Endes des Schellenrohres (153) ein Adapterelement (170) zum lösbaren Anbringen einer Fluidentnahme-Einrichtung vorgesehen ist.

2. Vorrichtung nach Anspruch 1, **dadurch gekennzeichnet, dass** der Bohrer (160) des Entnahmerohres (120) einen sich zu einer Spitze verjüngenden Konuskörper enthält und ausgebildet ist, um mittels entsprechenden Drehens des Schellenrohres (153) innerhalb des Gewindes (151) des Schellenturmes (150) ein Loch in die Wandung der Rohrleitung (110) zu bohren und die Öffnung (121) des Entnahmerohres (120) in das Innere der Rohrleitung (110) zu führen.

3. Vorrichtung nach Anspruch 2, **dadurch gekennzeichnet, dass** der Bohrer (160) mit einem nach außen abspanenden Außengewinde (161) versehen ist, so dass die bei einem Bohrvorgang erzeugten Späne innerhalb der Bohrung des Schellenturms (150) zu liegen kommen.

4. Vorrichtung nach einem der vorhergehenden Ansprüche, **dadurch gekennzeichnet, dass** das Entnahmerohr (120), das Schellenrohr (153) sowie das Adapterelement (170) einstückig ausgebildet sind und zusammen einen Entnahmekörper (122) bilden, der einen verschließbaren Teil einer Entnahmeleitung (120) bildet und von einem ersten Zustand, in dem das Entnahmerohr (120) durch entsprechendes Drehen des Schellenrohres (153) in dem Gewinde (151) des Schellenturms (150) in das Innere der Rohrleitung (110) eingeführt ist, reversibel in einen zweiten Zustand überführbar ist, in dem das Entnahmerohr (120) durch entsprechend entgegengesetztes Drehen des Schellenrohres (153) in dem Gewinde (151) des Schellenturms (150) zumindest im Wesentlichen aus dem Inneren der Rohrleitung (110) herausgeführt ist und die Öffnung (121) des Entnahmerohres (120) innerhalb der Bohrung des Schellenkörpers (130) zu liegen kommt.

5. Vorrichtung nach einem der vorhergehenden Ansprüche, **dadurch gekennzeichnet, dass** das Adapterelement (170) mit einem Innengewinde (171) versehen ist, das für die Aufnahme eines mit einem entsprechenden Außengewinde versehenen Endes einer Fluidentnahme-Einrichtung vorgesehen ist.

6. Vorrichtung nach einem der vorhergehenden Ansprüche, **dadurch gekennzeichnet, dass** das Fluid von Wasser gebildet ist und die Fluidentnahme-Einrichtung von einem Wasserhahn gebildet ist.

7. Vorrichtung nach einem der vorhergehenden Ansprüche, **dadurch gekennzeichnet, dass** der Schellenkörper (130) von zwei über eine Mehrzahl von Schrauben (131) fest miteinander verbundenen Schellen (132, 133) gebildet ist, wobei eine der Schellen (133) einstückig mit dem Schellenturm (150) ausgebildet ist.

8. Vorrichtung nach einem der vorhergehenden Ansprüche, **dadurch gekennzeichnet, dass** im Bereich des Schellenkörpers (130) zwischen der Rohrleitung (110) und einer Innenbohrung des Schellenkörpers (130) zur Aufnahme der Rohrleitung (110) eine Gummidichtung (140) vorgesehen ist.

9. Vorrichtung nach einem der vorhergehenden Ansprüche, **dadurch gekennzeichnet, dass** die Bohrung des Schellenturms (150) in einem der Rohrleitung (110) fernen Bereich eine glatte Innenwandung (154) zur Aufnahme eines glatt ausgebildeten rohrleitungsnahen Ansatzes (156) des Schellenrohres (153) aufweist.

10. Vorrichtung nach einem der vorhergehenden Ansprüche, **dadurch gekennzeichnet, dass** die Öffnung (121) des Entnahmerohres (120) als in der Nachbarschaft des Bohrers (160) angeordnete Querbohrung (161) ausgebildet ist, in die eine mit dem Inneren des Schellenrohres (153) kommunizierende axial ausgerichtete Höhlung (163) des Entnahmerohres (120) mündet, zur Aufnahme eines Teils des in der Rohrleitung (110) fließenden Fluids.

11. Vorrichtung nach einem der vorhergehenden Ansprüche, **dadurch gekennzeichnet, dass** der Schellenturm (150) mit einem Außengewinde 155 versehen ist, zum Zusammenwirken mit dem Innengewinde (181) einer das Adapterelement (170) abdeckenden Sicherungsmutter (180).

12. Vorrichtung nach Anspruch 11, **dadurch gekennzeichnet, dass** die Sicherungsmutter (180) im Bereich eines abgedeckten Adapterelementes (170) eine zentrale Bohrung (182) aufweist, zum Führen eines Schraubenschlüssels durch die Bohrung (182) und Ansetzen des Schraubenschlüssels an einem entsprechenden Gegenstück des Entnahmekörpers (122), zum Zweck eines Drehens des Entnahmekörpers (122).
